**Europäisches Patentamt**

(19) **European Patent Office**

**Office européen des brevets**

(11) Publication number: **0 280 441**
**B1**

(12) ## EUROPEAN PATENT SPECIFICATION

(45) Date of publication of the patent specification:
26.09.90

(51) Int. Cl.⁵: **B60P 7/04,** B60J 7/10

(21) Application number: **88301114.0**

(22) Date of filing: **10.02.88**

(54) **Method and apparatus for releasably fastening a stretchable fabric cover.**

(30) Priority: **26.02.87 US 19438**

(43) Date of publication of application:
**31.08.88 Bulletin 88/35**

(45) Publication of the grant of the patent:
**26.09.90 Bulletin 90/39**

(84) Designated Contracting States:
**AT DE FR IT**

(56) References cited:
**CA-A- 1 132 168**
**DE-A- 3 136 897**
**DE-A- 3 200 083**
**US-A- 3 167 349**
**US-A- 4 272 119**
**US-A- 4 505 512**

(73) Proprietor: **BESTOP, INC., 2100 West Midway Boulevard
P.O. Box 307, Broomfield Colorado 80020(US)**

(72) Inventor: **Rippberger, Gary R., 4239 Sumac Court,
Boulder Colorado 80302(US)**

(74) Representative: **Knott, Stephen Gilbert et al,
MATHISEN, MACARA & CO. The Coach
House 6-8 Swakeleys Road, Ickenham Uxbridge
Middlesex UB10 8BZ(GB)**

ACTORUM AG

## Description

Protective covers of one type of another for keeping rain, dust, snow and other debris from getting into or on surfaces that would either be damaged by such contaminants or at least have to be cleaned prior to use are commonplace. Examples of such uses are convertible tops for vehicles, swimming pool covers, boat covers, and so-called "tonneau covers" for open-topped truck beds, etc. In each instance, the cover, if it is made of some sort of fabric as opposed to a rigid lid-forming element, must be releasably fastened in some way to a rigid frame which generally borders and encloses the area to be protected. While seldom elastic in the sense of a rubber sheet or the like, such fabric covers are, nevertheless, usually "stretchable" to some modest degree due primarily to the nature of the fabric and its expanse. For instance, a canvas or vinyl vehicle top can be draped over a frame, pulled taut and stretched the half inch or so necessary to have the particular fasteners used to attach it to the vehicle body mate with one another.

There are several methods which may be used for detachably fastening such covers to a frame bordering the area to be protected, such as conventional hooks-and-eyes, lacing a rope back and forth between anchoring elements carried by the frame and a series of grommets in the cover, snap fasteners, and so-called "hook-and-loop" (Velcro) fasteners. One example of the use of such hook-and-loop fasteners is described in U.S. Patent No. 4 272 119.

Another known fastening for detachably connecting a vinyl convertible top or other fabric cover to the body of a vehicle comprises a deeply-grooved channel-shaped rail which is fastened to a rigid supporting structure on the body, and an elongate tongue-forming stiffener which is contained within a hem extending along a free edge of the fabric cover and which is insertable into the groove of the rail. When the fabric is stretched to the point where the tongue together with its fabric covering can be turned under and released into the groove of the rail, the connection is complete. The cover is detached by reversing the fitting procedure.

An example of this type of fastening for detachably connecting a stretchable fabric cover to a rigid frame is disclosed in US-A 3 167 349, and is also described later in more detail with reference to Figure 2 of the accompanying drawings.

The present invention relates to an improvement of this known type of fastening.

According to a first aspect of the invention, there is provided a fastener for releasably connecting a stretchable fabric cover panel to a rigid frame, said fastener having means attachable to the frame to define a groove with a bottom and an entryway, the groove having a depth greater than its width and opening in the direction in which the fabric is to be stretched, and means comprising an elongated strap attached to said panel of a size such that the strap can be inserted edgewise into the groove of the groove-forming means, characterised in that the width of the strap is substantially greater than the depth of the groove so as to define an insertable portion and a projecting portion which projects beyond the entryway of the groove when the insertable portion is fully seated in said groove at the bottom thereof, and in that the thickness of the strap is such as to effectively resist bending of the strap about a line extending along the length thereof when said insertable portion is in said groove.

Preferably the fabric panel is attached to the strap in face-to-face relation to one another along a line extending lengthwise of the projecting portion of the strap lying outside the entryway of the groove when said insertable portion of said strap is fully seated in said groove at the bottom thereof, said projecting portion defining a handhold for stretching the fabric to where an edge of the insertable portion of the strap is positioned adjacent the entryway of the groove for release into the groove in acute angular relation to the fabric panel fastened thereto.

With this arrangement the tongue is inserted into the groove after suitably stretching the fabric, without having to turn the tongue under as in the known fastening. By so doing, the resultant force exerted upon the tongue by the stretched fabric is generally exerted in a direction parallel to the groove which tends to keep the tongue seated therein, whereas, with the known system, the pull exerted upon the tongue by the fabric is such as to try and unfold the tongue and thus roll it out of the groove. Furthermore, the fabric does not have to be stretched as far to complete the connection and, once completed, it is far more secure. Even more significant, however, is the ease with which the fastening and unfastening of the connection is accomplished, especially unfastening.

Preferably the projecting portion of the strap has a free edge and the fabric panel is attached to the strap at a location spaced from the free edge of said projecting portion of said strap and outside of the groove when the insertable portion of the strap is fully seated in said groove at the bottom thereof. Preferably the fabric panel is attached about the free edge of said projecting portion of said strap.

The invention thus provides a fabric-to-rigidanchorpoint fastening system which is simple, easy to use, versatile, safe, inexpensive, lightweight, compact and even decorative. The system is also able to accommodate minor dimensional irregularities in the mating surfaces while nevertheless maintaining a secure connection.

Preferred examples of the fastener in accordance with the invention, and its method of use, will now be described with reference to the accompanying drawings, in which:

Figure 1 is a fragmentary sectional view showing in phantom and full lines one embodiment of the invention and its method of operation;

Figure 2 is a fragmentary sectional view similar to Figure 1 and to the same scale, but differing in that it illustrates the construction and operation of a known form of fastener for forming a similar connection;

Figure 3 is a fragmentary sectional perspective view to the same scale as the preceding Figures, illustrating a modified form of the fastener in accordance with the invention which is used at the corners of a rigid frame; and,

Figure 4 is a fragmentary sectional view similar to Figure 1 but showing an alternative embodiment of the invention.

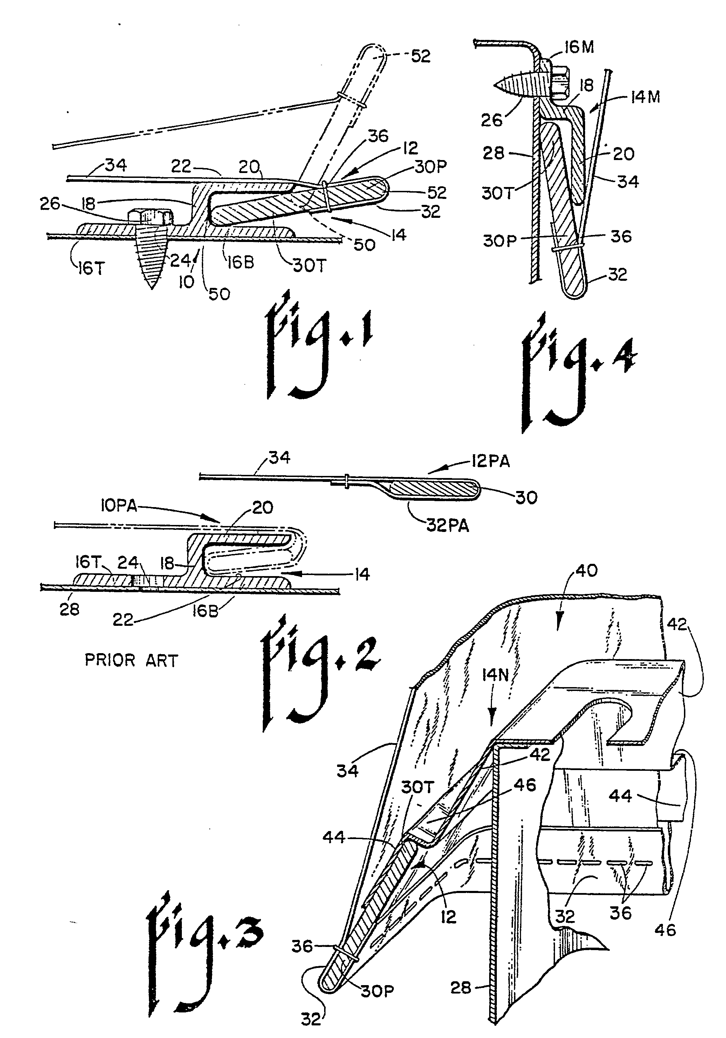

Referring now to the embodiment of the invention illustrated in Figure 1, reference numeral 10 has been chosen to represent the two-element fastener in a general way and it will be seen to comprise a tongue-forming element 12 and a groove forming element 14.

The groove-forming element 14, in the particular form shown in Figure 1, comprises a generally h-shaped extrusion having a backplate 16 defining the stem of the "h", a web 18 forming the crossbar portion thereof, and a flange 20 depending from the web in fixed-spaced parallel relation to the bottom leg 16B of the stem or backplate. Leg 16B and stem 20 co-operate with one another and with web 18 connecting the two together to form the groove 22 of the element 14. The top leg 16T of the backplate is preferably apertured as shown at 24 to receive securing means 26 by which it is attached to a rigid support or frame 28.

The tongue-forming element 12 comprises a relatively stiff, yet bendable, elongate plastics bar or strap 30 of sufficient thickness to effectively resist bending about a longitudinal line while, at the same time, allowing it to bend about a transversely-extending line. More will be said about its bendability versus its stiffness in connection with the description of the method of using the fastener that will follow later. The thickness of the tongue in relation to the width of the groove is such that the former is loosely seated within the latter much in the manner illustrated. Widthwise, the tongue is a good deal wider than the groove 22 is deep so as to leave a considerable portion (almost half) 30P of the tongue projecting beyond the mouth of the groove. On the other hand, the groove 22 is sufficiently deep in comparison to its width to hold the tongue end 30T of the tongue-forming element securely seated therein and capable of resisting a force pulling thereagainst acting generally in a direction to seat it against the bottom of the groove. Saying this another way, with the tongue-forming element 12 seated in the bottom of the groove 22, no reasonable force pulling on the projecting portion 30P thereof in a direction to seat the tongue end 30T more firmly, even a bending one or one directed to an acute angle less than approximately 90°, should be able to dislodge it (see Fig.3).

Now, it can be seen in both Figures 1 and 3, that the projecting portion 30T of the tongue-forming element 12 is at least partially encased in a fold or cuff 32 along the edge of a stretchable fabric panel 34 so as to leave the tongue end 30T thereof extending back along the panel in face-to-face relation to the latter and free of its cuff. By way of contrast, the tongue-forming element 12PA of the known two-part connector 10PA shown in Figure 2 will be seen to be completely encased within the hem 32PA of the fabric panel and, therefore, no portion of the strap 30 inside thereof is left free to enter the groove 22 of the groove-forming element 14.

Returning again to Figures 1 and 3, the projecting portion 30P of the tongue element 12 is shown sewn into the cuff as indicated at 36 although, of course, other fastening methods could be used such as staples, rivets, etc. In any event, the particular fastening means is relatively unimportant except, perhaps, in particular applications where rust or some other factor may be a problem. Preferably, the line of attachment of the panel 34 to the tongue 12 should lie outside the groove 22 when the tongue is seated therein as shown. Best of all, the line of attachment should lie closely adjacent the mouth of the groove 12 as opposed to out near the free edge of projecting portion 30P.

Before describing in detail the method of using the fastener 10 and comparing it with the method of using the prior art connector 10PA, it might be well to point out that both systems use comparable groove-forming elements 14. In the embodiment of Figure 4, on the other hand, a slightly modified form of tongue-retaining element 14M has been shown in which the bottom leg 16B of the backplate 16M has been eliminated and the frame 28 to which leg 16T is attached co-operates with flange 20 and web 18 to define the tongue-receiving groove 22. From a functional standpoint, the h-shaped tongue-forming element 14 of Figure 1 and the offset tongue-retainer 14M of Figure 4 which co-operates with the frame 28 to complete the groove, are essentially the same.

A still further modified, and actually unique, form of tongue-retaining element 14N is shown in Figure 3. In this embodiment, the portion of the corner element that has been indicated broadly by reference numeral 40 which performs the same function as the groove-forming elements 14 of Figures 1 and 2, and 14M and 28 of Figure 4, is provided by element 14N which requires no groove analogous to groove 22 at all to hold and capture the tongue-forming element. In other words, while stepped flanges 42 and 44 interconnected by web 46 co-operate with one another to define an offset member not unlike the tongue-retaining element 14M of Figure 4 in cross-section, because the element 14N is curved around the corner, there is no necessity for having a leg 16B or the frame 28 to complete the groove. Instead, as the tongue-forming element 12 is bent around the corner shaped by the corner-forming element 40, it is held against the inside face of the flange 44 and drawn snugly up against the web 46 without being backed up in any manner. Another way of looking at it is that once curved around the corner, the pull on the projecting portion 30P of the tongue that in a straight section would have more of a tendency to twist it away from the flange 44 cannot do so. Apart from the tongue-retaining portion 14N of the corner-forming element 40 just described, the only other part of the element is a plate atop the latter which, in the case of an open-topped four-wheel drive vehicle, bolts onto the rear outside corners of the body and bridges the gap between straight sections of tongue-retaining elements 14 which extend along the sides and back.

Looking next at Figure 2, the manner in which the corresponding prior art fastening system works will now be described in detail. It is first necessary to stretch the fabric panel 34 and pull the tongue-forming element 12PA far enough past the entryway or mouth of the groove 22 such that it can be folded under as shown in phantom lines and tucked into the groove before being released. Moreover, it is not possible to do this in small short increments, i.e. by twisting the tongue-forming portion a bit at a time and feeding it into the groove. Instead, for all practical purposes, a whole run has to be stretched past the groove, turned under and fed into the latter more or less all at once. Unfortunately, this is a very difficult and time-consuming operation that generally requires two or more people working together to get it done. When one recognises the fact that even in a small "Jeep-size" four-wheel drive vehicle, there is somewhere around forty feet of fabric top that has to be snapped, tucked or otherwise detachably connected to the body, the true magnitude of the problem can be appreciated. As a matter of fact, the mounting of soft tops on these vehicles became so troublesome to one manufacturer that they refused to do it at the factory and required their dealers to install the tops at the point of delivery.

Returning once again to Figure 1, contrast the above with the manner in which the improved tongue-and-groove fastener of the present invention works. As before, the fabric is stretched, but only so far as to permit the free inner edge 50 of the tongue 12 to slide over the edge of the flange 20 and begin to enter the mouth of the groove 22 as shown in phantom lines. Once in place occupying the phantom-line position, the user can effectively release his or her "pull" upon the fabric so long as a hold is maintained on the outer edge 52 of the tongue-forming element such that it can be pushed toward the tongue-retaining element 14 and rotated into the groove 22 therein. Actually, the edge of the flange 20 defines a fulcrum around which the tongue is "levered" into place. Most importantly, this can be done incrementally in the sense that once a small section occupies the phantom-line position of Figure 1, it can be fitted in the groove without having the whole length stretched and ready to enter the groove at the same time, all primarily due to the fact that the tongue does not have to be turned under in any way. As each section in turn is pulled taut, stretched and turned into the groove before being released, it will become apparent that this simple operation can be handled by one person quickly and efficiently. As a matter of fact, savings in time of installation alone over the prior art method of Figure 2 amounting to 25% and more have been observed.

If fastening the cover to the frame in the prior art system of Figure 2 were not bad enough, unfastening it is even worse in that there is nothing available outside the groove to get hold of for the purpose of restretching the fabric and pulling the tongue free. By way of contrast, in the system in accordance with the invention it is a simple matter to get hold of the projecting portion 30P of the tongue and pull it to simultaneously stretch the fabric and free the tongue. There is also less wear and tear upon the fabric since it is not bent around the edge of the flange 20 as in the prior art system, nor is it in contact with the inside of the groove.

From an operational standpoint, the prior art fasteners like that shown in Figure 2 have proven to be most unsatisfactory in that the pull upon the fabric panel 34 acts to twist the tongue-forming element 12PA out of the groove as it tends to unfold. So serious was this problem that convertible tops were found to come loose during high winds and sometimes even at high highway speeds. Conversely, the forces acting upon the tongue-forming means 12 during use of the fastener in accordance with the invention are such that they are primarily directed parallel to the tongue and in a direction to seat it more firmly into the bottom of the groove due to the stretch in the fabric. While admittedly there are some torsional forces acting upon the tongue that would tend to rotate it out of the groove, they are minimal, especially if the line of connection (36) of the fabric panel with the tongue lies closely adjacent the free edge of the flange 20 such that the lever arm defined by the latter and the stitching is kept quite short. Returning to the thickness of the tongue, it is for this reason that it should be thick enough to effectively resist bending about a longitudinal line under the normal pull exerted thereon by the stretched fabric because, if it were too thin and flexible, it would merely fold over flange 20. Even so, it should not be so thick as to effectively prevent bending about a transverse line since this is necessary to bend it around corners, such as shown in Figure 2, and especially to feed it incrementally a section at a time into the grooved element.

## Claims

1. A fastener for releasably connecting a stretchable fabric cover panel (34) to a rigid frame (28), said fastener having means (14) attachable to the frame to define a groove (22) with a bottom and an entryway, the groove having a depth greater than its width and opening in the direction in which the fabric is stretched, and means (12) comprising an elongated strap (30) attached to said panel (34) of a size such that the strap can be inserted edgewise into the groove (22) of the grooveforming means, characterised in that the width of the strap (30) is substantially greater than the depth of the groove (22) so as to define an insertable portion (30T) and a projecting portion (30P) which projects beyond the entryway of the groove (22) when the insertable portion (30T) is fully seated in said groove at the bottom thereof, and in that the thickness of the strap (30) is such as to effectively resist bending of the strap about a line extending along the length thereof when said insertable portion (30T) is in said groove (22).

2. A two-part fastener as claimed in claim 1, in which the strap (30) is bendable about a line extending substantially transversely thereof.

3. The fastener as claimed in claim 1 in which the strap (30) is twistable along a line extending longitudinally thereof.

4. The fastener as claimed in claim 1 in which the width and depth of the groove (22) are of dimensions in relation to the width and thickness of the projecting portion (30P) of the strap (30) such as to maintain the strap in substantially parallel relation to the stretched fabric panel (34) attached thereto.

5. The fastener as claimed in claim 1 in which the projecting portion (30P) of the strap (30) is contained within a cuff (32) formed at a free edge of the fabric panel (34), and the panel is attached to the projecting portion of the strap by stitching (36).

6. The fastener as claimed in claim 5 wherein the stitching (36) is located outside the groove (22) when the insertable portion (30T) of said strap (30) is fully seated in the groove (22) in the bottom thereof.

7. The fastener as claimed in claim 1 in which the fabric panel (34) is attached to the strap (30) in face-to-face relation to one another along a line (36) extending lengthwise of the projecting portion (30P) of the strap lying outside the entryway of the groove (22) when said insertable portion (30T) of said strap (30) is fully seated in said groove (22) at the bottom thereof, said projecting portion (30P) defining a handhold for stretching the fabric (34) to where an edge (50) of the insertable portion (30T) of the strap is positioned adjacent the entryway of the groove for release into the groove in acute angular relation to the fabric panel (34) fastened thereto.

8. The fastener as claimed in claim 1 in which the projecting portion (30P) has a free edge (52) and the fabric panel (34) is attached to the strap (30) at a location spaced from the free edge (52) of said projecting portion (30P) of said strap (30) and outside of the groove (22) when the insertable portion (30T) of the strap (34) is fully seated in said groove (22) at the bottom thereof.

9. The fastener as claimed in claim 8 in which the fabric panel (34) is attached about the free edge (52) of said projecting portion (30P) of said strap (30).

10. The fastener as claimed in claim 1 in which the groove-forming means has a first leg (20) with a free edge and said projecting portion (30P) of said strap (30) forms a handhold so said strap may be utilized as a lever with said free end of said first leg acting as a fulcrum whereby said strap is pivotable about said free end to enable said panel to be easily stretched so said insertable portion (30T) of said strap (30) may enter and seat in said groove (22).

## Revendications

1. Fixation destinée à réaliser la liaison amovible entre un panneau de couverture en tissu extensible (34) sur un cadre rigide (28), ladite fixation comportant un dispositif (14) fixé sur le cadre délimitant un rainure (22) avec un fond et une entrée, cette rainure ayant une profondeur supérieure à se largeur et s'ouvrant dans la direction dans laquelle le tissu doit être tendu, et un dispositif (12) comprenant une languette allongée (30) fixée audit panneau (34), d'une taille telle que la languette puisse être insérée par l'un de ses bords dans la rainure (22) du dispositif formant rainure, caractérisée en ce que la largeur de la languette (30) est substantiellement supérieure à la profondeur de la rainure (22) de manière à définir une partie à insérer (30t) et une partie saillante (30p) dépassant de l'entrée de la rainure (22) lorsque la partie à insérer (30t) est entièrement engagée dans la rainure et repose sur son fond, et en ce que l'épaisseur de la languette (30) est telle qu'elle lui permette de résister efficacement à la flexion sur une ligne longitudinale lorsque ladite partie à insérer (30t) est dans ladite rainure (22).

2. Fixation en deux parties selon la revendication 1, où la languette (30) est flexible selon une ligne essentiellement transversale.

3. Fixation selon la revendication 1, où la languette (30) peut être pivotée selon une ligne longitudinale.

4. Fixation selon la revendication 1, où la largeur et la profondeur de la rainure (22) entretiennent avec la largeur et l'épaisseur de la partie saillante (30p) de la languette (30) un rapport tel que la languette soit maintenue de manière essentiellement parallèle au panneau de tissu tendu (34) qui est fixé dessus.

5. Fixation selon la revendication 1 où la partie saillante (30p) de la languette (30) est placée dans un revers (32) formé sur le bord libre du panneau de tissu (34) et où le panneau est fixé sur la partie saillante de la languette par une piqûre (36).

6. Fixation selon la revendication 6 où la piqûre (36) est située en dehors de la rainure (22) lorsque la partie à insérer (30t) de ladite languette (30) est entièrement engagée dans la rainure (22) et repose sur son fond.

7. Fixation selon la revendication 1 où le panneau de tissu (34) est fixé sur la languette (30) en les appliquant l'un contre l'autre, le long d'une ligne (36) disposée longitudinalement sur la partie saillante (30p) de la languette se trouvant en dehors de l'entrée de la rainure (22) lorsque ladite partie à insérer (30t) de ladite languette (30) est engagée totalement dans ladite rainure (22) et repose sur son fond, ladite partie saillante (30p) formant une poignée pour tendre le panneau de tissu (34) jusqu'à ce qu'un bord (50) de la partie à insérer (30t) de la languette soit placé au niveau de l'entrée de la rainure de manière à être relâché dans la rainure en formant un angle aigu avec le panneau de tissu (34) qui est fixé dessus.

8. Fixation selon la revendication 1 où la partie saillante (30p) possède un bord libre (52) et où le panneau de tissu (34) est fixé sur la languette (30) à un endroit éloigné du bord libre (52) de ladite partie saillante (30p) de ladite languette (30) et situé en dehors de la rainure (22) lorsque la partie à insérer (30t) de la languette (34) est entièrement engagée dans ladite rainure (22) et repose sur son fond.

9. Fixation selon la revendication 8 où le panneau de tissu (34) est retourné sur le bord libre (52) de ladite partie saillante (39p) de ladite languette (30).

10. Fixation selon le revendication 1 où le dispositif formant rainure possède un premier jambage (20) avec un bord libre et où ladite partie saillante (30p) de ladite languette (30) forme une poignée telle que ladite languette peut être utilisée comme levier coopérant avec ladite extrémité libre dudit premier jambage jouant le rôle de point d'appui pour que ladite languette pivote autour de ladite extrémité libre afin de permettre audit panneau de tissu d'être facilement tendu et à ladite partie à insérer (30t) de ladite languette (30) de s'engager dans ladite rainure (22).

## Patentansprüche

1. Befestigungsvorrichtung zum lösbaren Befestigen eines Abdeckpanels (34) aus dehnbarem Stoff an einem steifen Rahmen (28), welche Vorrichtung Mittel (14) aufweist, die am Rahmen anbringbar sind und eine einen Boden und einen Eingang aufweisende Nut (22) bilden, welche Nut eine Tiefe hat, welche größer ist als ihre Breite und nach jener Richtung offen ist, in die der Stoff gedehnt wird, und weiter Mittel (12), die ein langgestrecktes Band beinhalten, welches am Panel (34) angebracht ist und von solcher Größe ist, daß das Band randweise in die Nut (22) der nutbildenden Mittel einsetzbar ist, dadurch gekennzeichnet, daß die Breite des Bandes (30) wesentlich größer ist als die Tiefe der Nut (22), so daß ein einführbarer Abschnitt (30T) und ein vorstehender Abschnitt (30P) vorliegt, der über den Eingang der Nut (22) ragt, wenn der einführbare Abschnitt (30T) in der Nut voll auf deren Boden aufsitzt, und daß die Dicke des Bandes so ist, daß einem Biegen des Bandes um eine in dessen Längsrichtung verlaufende Linie, wenn sich der einführbare Abschnitt (30T) in der Nut (22) befindet, wirkungsvoll standgehalten ist.

2. Zweiteilige Befestigungsvorrichtung nach Anspruch 1, dadurch gekennzeichnet, daß das Band (30) um eine quer zu ihm verlaufende Linie biegbar ist.

3. Befestigungsvorrichtung nach Anspruch 1, dadurch gekennzeichnet, daß das Band (30) längs einer in seiner Längsrichtung verlaufenden Linie verwindbar ist.

4. Befestigungsvorrichtung nach Anspruch 1, dadurch gekennzeichnet, daß die Breite und Tiefe der Nut (22) im Verhältnis zur Breite und Dicke des vorstehenden Abschnittes (30P) des Bandes (30) solche Abmessungen haben, daß das Band in im wesentlichen paralleler Stellung in bezug auf das daran angebrachte gespannte Stoffpanel (34) gehalten wird.

5. Befestigungsvorrichtung nach Anspruch 1, dadurch gekennzeichnet, daß der vorstehende Abschnitt (30P) des Bandes (30) in eine an einem freien Rand des Stoffpanels (34) gebildete Stulpe (32) eingeschlossen ist, und daß das Panel durch eine Naht (36) am vorstehenden Abschnitt des Bandes angebracht ist.

6. Befestigungsvorrichtung nach Anspruch 5, dadurch gekennzeichnet, daß sich die Naht (36) außerhalb der Nut (22) befindet, wenn der einführbare Abschnitt (30T) des Bandes (30) in der Nut (22) voll am Boden derselben aufsitzt.

7. Befestigungsvorrichtung nach Anspruch 1, dadurch gekennzeichnet, daß das Stoffpanel in gegenüberliegender Anordnung längs einer in Längsrichtung des vorstehenden Abschnittes (30P) verlaufenden Linie (36) angebracht ist, der außerhalb des Einganges der Nut liegt, wenn der einführbare Abschnitt (30T) des Bandes (30) in der Nut (22) voll am Boden derselben aufsitzt, wobei der vorstehende Abschnitt (30P) eine Handhabe zum Spannen des Stoffes (34) bildet, bis ein Rand (50) des einführbaren Abschnittes (30T) des Bandes sich am Eingang der Nut befindet, um in die Nut hinein in spitzem Winkel zum daran befestigten Stoffpanel (34) losgelassen zu werden.

8. Befestigungsvorrichtung nach Anspruch 1, dadurch gekennzeichnet, daß der vorstehende Abschnitt (30P) einen freien Rand (53) hat, und daß das Stoffpanel (34) an einer im Abstand von dem freien Rand (52) des vorstehenden Abschnittes (30P) des Bandes (30) gelegenen Stelle angebracht ist, welche sich außerhalb der Nut (22) befindet, wenn der einführbare Abschnitt (30T) des Bandes (34) in der Nut (22) voll am Boden derselben aufsitzt.

9. Befestigungsvorrichtung nach Anspruch 8, dadurch gekennzeichnet, daß das Stoffpanel (34) um den freien Rand (52) des vorstehenden Abschnittes (30P) des Bandes (30) angebracht ist.

10. Befestigungsvorrichtung nach Anspruch 1, dadurch gekennzeichnet, daß das die Nut bildende Mittel einen ersten Schenkel (20) mit einem freien Rand hat, und der vorstehende Abschnitt (30P) des Bandes (30) eine Handhabe bildet, so daß das Band als Hebel benützt werden kann, wobei das freie Ende des genannten ersten Schenkels als Stützpunkt wirkt und das Band um das freie Ende schwenkbar ist, um ein leichtes Spannen des Panels zu ermöglichen, so daß der einführbare Abschnitt (30T) des Bandes (30) in die Nut (22) eintreten und sich festsetzen kann.

Fig. 1

Fig. 4

PRIOR ART

Fig. 2

Fig. 3